(19)

**Europäisches Patentamt**
**European Patent Office**
**Office européen des brevets**

(11) **EP 4 746 349 A1**

(12) **EUROPEAN PATENT APPLICATION**

(43) Date of publication:
**20.05.2026 Bulletin 2026/21**

(21) Application number: **25208993.3**

(22) Date of filing: **15.10.2025**

(51) International Patent Classification (IPC):
**H04L 9/40** *(2022.01)* **H04L 9/00** *(2022.01)*

(52) Cooperative Patent Classification (CPC):
**H04L 63/0428; H04L 9/008**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.11.2024 EP 24306899**

(71) Applicant: **Orange**
**92130 Issy-les-Moulineaux (FR)**

(72) Inventors:
• **PLESA, Mihail**
**020334 BUCHAREST (RO)**
• **IRIMIA, Sebastian**
**020334 BUCHAREST (RO)**
• **DAVID, Simona**
**020334 BUCHAREST (RO)**

(74) Representative: **Plasseraud IP**
**104 Rue de Richelieu**
**CS92104**
**75080 Paris Cedex 02 (FR)**

(54) **METHOD FOR PROCESSING A DIGITAL CONTENT USING A HOMOMORPHIC ENCRYPTION PROTOCOL**

(57)     It is disclosed a method for processing a digital content, comprising:
- obtaining, by a client device, a plaintext representative of the digital content;
- selecting, by the client device, encryption elements among a group of encryption elements;
- encrypting the plaintext by adding the selected encryption elements to the plaintext, to obtain a ciphertext;
- transmitting, by the client device, the ciphertext to a processing device;
- obtaining, by the client device, a processed ciphertext from the processing device, the processed ciphertext being determined by applying a processing content to the ciphertext;
- obtaining, by the client device, a group of reference elements, the group of reference elements being determined by applying the processing content to the group of encryption elements;
- decrypting, by the client device, the processed ciphertext by subtracting reference elements corresponding to the selected encryption elements from the processed ciphertext to obtain a processed plaintext.

FIG. 2

EP 4 746 349 A1

## Description

The present disclosure generally belongs to the technical field of encryption and decryption of digital content.

More precisely, the present disclosure relates to a method for processing a digital content in a privacy-preserving way by applying a homomorphic encryption protocol.

## Background of the disclosure

When seeking to process digital content, entities such as companies and individuals (here referred to as "client device") often rely on third-parties (here referred to as "processing device"), mainly because a client device does not possess the required computational resources and/or the know-how required for the respective processing.

The processing of digital content involves for example image classification, image feature classification or threat classification in Internet traffic.

Linear computations are the core of many processing data structures and in particular of learning algorithms for artificial intelligence. For example, machine learning data structures such as neural networks rely on linear operations.

There are many current solutions for processing confidential digital content based on homomorphic encryption, secure multi-party computation, trust execution environments, differential privacy and various combinations between them.

All these approaches require two main privacy properties of the protocol:

- the processing device should not learn the input of the client device with non-negligible probability;
- the client device should not learn the model of the processing device with non-negligible probability.

These protocols are slow in terms of effective runtime and generate large ciphertexts, which leads to an inflation of the data.

However, there are situations in which the second property (i.e. that the client device should not learn the model of the processing device) is not necessary.

Accordingly, a need exists for an efficient method for processing confidential digital content that respects only the first property (i.e. that the processing device should not learn the input of the client device), but which is more efficient in terms of running time than current solutions.

## Summary

The present disclosure remedies the shortcomings of prior art.

It is disclosed a method for processing a digital content, comprising:

- obtaining, by a client device, a plaintext representative of the digital content to be processed;
- selecting, by the client device, one or more encryption elements among a group of encryption elements,
- encrypting, by the client device, the plaintext by adding a linear combination of the selected encryption elements to the plaintext, to obtain a ciphertext;
- transmitting, by the client device, the ciphertext to a processing device;
- obtaining, by the client device, a processed ciphertext from the processing device, the processed ciphertext being determined by the processing device by applying a processing content to the ciphertext;
- obtaining, by the client device, a group of reference elements, the group of reference elements being determined by the processing device by applying the processing content to the group of encryption elements;
- decrypting, by the client device, the processed ciphertext by subtracting a linear combination of reference elements among the group of reference elements corresponding to the linear combination of the selected encryption elements from the processed ciphertext to obtain a processed plaintext.

The client device may be any kind of device, such as a computer, capable of exchanging data with a processing device and capable of processing data and of encrypting and decrypting data. The client device may have a specific arrangement and/or specific programming in order to implement the different portions of the method.

The processing device may be any kind of device, such as a computer, capable of exchanging data with a client device and capable of processing data. The processing device may have a specific arrangement and/or a specific programming in order to implement the different portions of the method.

The expression *"obtaining, by a client device, a plaintext representative of the digital content to be processed"* may mean that the plaintext is determined by the client device, or that the plaintext is sent by another device to the client device and received by the client device.

The digital content may be any kind of data to be processed. For example, the digital content may be data which represent an image and the method may then be applied to these data in order to identify a pattern in the image.

The plaintext may be a tensor of any dimensions. For example, the plaintext may be a scalar, a vector or a matrix. However, the plaintext may even be a higher-dimensional tensor.

An encryption element may be a tensor of any dimensions. For example, each encryption element may be a scalar, a vector or a matrix. However, the encryption elements may even be higher-dimensional tensors.

The dimension of the encryption elements may be chosen according to the dimension of the plaintext. For example, when the plaintext is a vector, the encryption elements may be vectors or scalars.

The processing content may be a tensor of any dimensions, such as a scalar, a vector or a matrix. However, the processing content may even be a higher-dimensional tensor.

Applying a processing content to the ciphertext may correspond to linear operations performed on the ciphertext, i.e. to one or more additions and one or more multiplications.

The encryption and decryption as performed by the method may be homomorphic with respect to addition and multiplication, i.e. multiplicative or additive operations performed on the ciphertext will also be present in the processed plaintext.

The expression *"subtracting a linear combination of reference elements among the group of reference elements corresponding to the linear combination of the selected encryption elements from the processed ciphertext"* may mean that the same encryption elements with the same multiplicative prefactors of the linear combination that were added to the plaintext for encryption are now subtracted from the processed ciphertext, but after having applied the processing content to these encryption elements.

For example, when considering a group of four encryption elements {a1, a2, a3, a4} and if a linear combination 2*a1 + a3 has been added to the plaintext in order to encrypt the plaintext, the linear combination A x (2*a1 + a3) is to be subtracted from the processed ciphertext for decryption, where A is the processing content.

The proposed method allows efficiently processing a confidential digital content, which is achieved by applying the processing content to the ciphertext without revealing the digital content to a third-party such as the processing device. The processing device obtains from the client device the ciphertext and transmits the processed ciphertext to the client device. The processing device has no information about the plaintext or the processed plaintext.

When compared to methods in which both the digital content of the client device and the processing content of the processing device are to be kept confidential, the present method in which only the digital content of the client device is to be kept confidential and in which the processing content of the processing device may be public generates small ciphertexts and is very efficient and fast in effective runtime. In particular, since only additive operations are used for encryption and decryption, the client device can easily encrypt and decrypt data, even if the client device has limited computational resources.

The proposed method is innovative in that only additive operations are used for encryption and decryption, and in that the reference elements for decryption are determined by the processing device without revealing any relevant information regarding the digital content or the selected encryption elements to the processing device.

In an embodiment, selecting, by the client device, one or more encryption elements among the group of encryption elements, may comprise:

- obtaining, by the client device, a sequence of symbols representative of encryption elements to be selected from the group of encryption elements,
- applying the sequence of symbols to the group of encryption elements.

In an embodiment, the sequence of symbols may comprise a sequence of numbers.

In an embodiment, the sequence of symbols may comprise a sequence of binary numbers.

In an embodiment, the sequence of symbols may comprise a sequence of random numbers.

For example, a sequence of symbols [5 1 0 3] applied to the group {a1, a2, a3, a4} leads to the following linear combination: 5*a1 + 1*a2 + 0*a3 + 3*a4 = 5a1 + a2 + 3a4.

Since the sequence of symbols is confidential and not known by the processing device, the processing device does not have any knowledge about the linear combination used for encryption of the plaintext. The processing device only knows the group of encryption elements {a1, a2, a3, a4} and the group of reference elements {Aa1, Aa2, Aa3, Aa4}.

When a new sequence of random numbers is used for each encryption, the processing device will not know the current linear combination, even if it has managed to gather information about a former linear combination.

Thus, confidentiality of the plaintext and the processed plaintext are ensured.

In another embodiment, selecting, by the client device, one or more encryption elements among a group of encryption elements may comprise:

- encrypting, by the client device, the sequence of symbols by applying a homomorphic encryption protocol to the sequence of symbols;
- transmitting, by the client device, the encrypted sequence of symbols to the processing device;
- obtaining, by the client device, an encrypted linear combination of selected encryption elements from the processing device, the encrypted linear combination of selected encryption elements being determined by the processing device by applying the encrypted sequence of symbols to the group of encryption elements;
- decrypting, by the client device, the encrypted linear combination of selected encryption elements to obtain the linear combination of selected encryption elements.

A homomorphic encryption is a form of encryption that allows computations to be performed on a ciphertext without having to decrypt the ciphertext therefore. The resulting computations are directly translated into the plaintext. This means that encrypting a plaintext, applying a given transformation to the resulting ciphertext and then decrypting the processed ciphertext will lead to the same result as if the transformation had been directly applied to the plaintext.

For encryption of the sequence of symbols, a homomorphic encryption protocol being homomorphic with respect to addition and multiplication may be used.

Applying the encrypted sequence of symbols to the group of encryption elements may correspond to a multiplication between the encrypted sequence of symbols and the group of encryption elements.

The client device determines the sequence of symbols, but the actual linear combination is calculated by the processing device. Thus, the calculation of the linear combination of selected encryption elements which may be complex to calculate may be delegated to the processing device.

Therefore, the amount of data to be treated by the client device and the required calculation resources of the client device are minimized.

In an embodiment, the homomorphic encryption protocol may be a Paillier encryption protocol.

A specific advantage of the Paillier encryption protocol is that it is homomorphic with respect to addition and multiplication.

In another embodiment, the method may comprise:

- obtaining, by the client device, a group of encryption elements;

wherein the one or more encryption elements are selected, by the client device, among the group of encryption elements obtained by the client device.

Thus, the client device may determine itself the linear combination of selected encryption elements without relying on the processing device therefore.

In an embodiment, the plaintext may comprise a plurality of plaintext elements of a group of plaintext elements, and the encryption elements of the group of encryption elements may be configured to form a basis for each plaintext element of the group of plaintext elements.

Thus, the group of encryption elements may generate the group of plaintext elements.

For example, when considering that each plaintext element is part of a plaintext space (i.e. a group of plaintext elements) equal to {0, 1, ....15}, and when considering a group of encryption elements equal to {0, 1, 2, 4}, the group of encryption elements generates the group of plaintext elements, i.e. each plaintext element of the plaintext space can be written in a basis of 2.

This makes the encryption of the plaintext implemented by the present method practically One-Time-Pad (OTP), i.e. the method provides perfect secrecy.

Another aspect of the present disclosure is related to a computer program product comprising instructions which, when the instructions are executed by a processing unit, cause the processing unit to implement a method as described above.

This program may use any programming language (for example, an object-oriented language or other), and be in the form of interpretable source code, partially compiled code, or fully compiled code.

Another aspect of the disclosure is related to a client device, comprising:

- an interface configured to obtain a plaintext representative of a digital content to be processed;
- a circuit configured to select one or more encryption elements among a group of encryption elements,
- a circuit configured to encrypt the plaintext by adding a linear combination of the selected encryption elements to the plaintext, to obtain a ciphertext;
- an interface configured to transmit the ciphertext to a processing device;
- an interface configured to obtain a processed ciphertext from the processing device, the processed ciphertext being obtained by applying a processing content to the ciphertext;
- an interface configured to obtain a group of reference elements from the processing device, the group of reference elements being obtained by applying the processing content to the group of encryption elements;

- a circuit configured to decrypt the processed ciphertext by subtracting a linear combination of reference elements among the group of reference elements corresponding to the linear combination of the selected encryption elements from the processed ciphertext to obtain a processed plaintext.

Another aspect of the disclosure is related to a processing device, comprising:

- an interface configured to obtain a processing content to be applied to a plaintext representative of a digital content to be processed;
- an interface configured to obtain a group of encryption elements;
- an interface configured to obtain a ciphertext from a client device, the ciphertext being determined by a client device by adding one or more encryption elements selected among the group of encryption elements to the plaintext;
- a circuit configured to apply the processing content to the ciphertext, to obtain a processed ciphertext;
- a circuit configured to apply the processing content to the group of encryption elements, to obtain a group of reference elements;
- an interface configured to transmit the processed ciphertext to the client device;
- an interface configured to transmit the group of reference elements to the client device, in order for the client device to decrypt the processed ciphertext by subtracting a linear combination of reference elements among the group of reference elements corresponding to the linear combination of the selected encryption elements from the processed ciphertext to obtain a processed plaintext.

Another aspect of the present disclosure is related to a system comprising a client device as described above and a processing device as described above.

The client device and the processing device may be for example a computer.

The client device and the processing device may communicate with each other over any communication channel (private or public), for example via Internet.

The system may be configured to implement the method described above.

The proposed system allows efficiently processing a confidential digital content, which is achieved by applying, by the processing device, the processing content to the ciphertext without revealing the digital content. The processing device obtains from the client device the ciphertext and transmits the processed ciphertext to the client device. The processing device has no information about the plaintext or the processed plaintext.

When compared to systems in which both the digital content of the client device and the processing content of the processing device are to be kept confidential, the present system in which only the digital content of the client device is to be kept confidential and in which the processing content of the processing device is public, the present system generates small ciphertexts and is very efficient and fast in effective runtime. In particular, since only additive operations are used for encryption and decryption, the client device can easily encrypt and decrypt data, even if the client device has limited computational resources.

The proposed system is innovative in that only additive operations are used for encryption and decryption, and in that the reference elements for decryption are determined by the processing device without revealing any relevant information regarding the digital content or the selected encryption elements to the processing device.

**Brief Description of Drawings**

Other features, details and advantages will be shown in the following detailed description and on the figures, on which:

**Fig. 1**

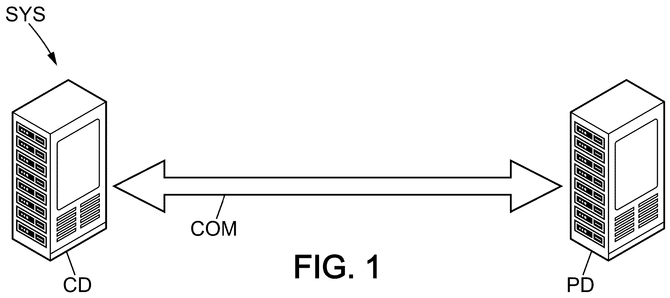

[Fig. 1] shows an arrangement of a system comprising a client device and a processing device according to the present disclosure.

**Fig. 2**

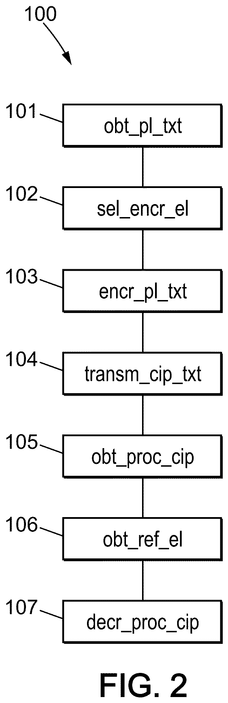

[Fig. 2] shows a flow chart of a method for processing a digital content according to the present disclosure.

**Fig. 3**

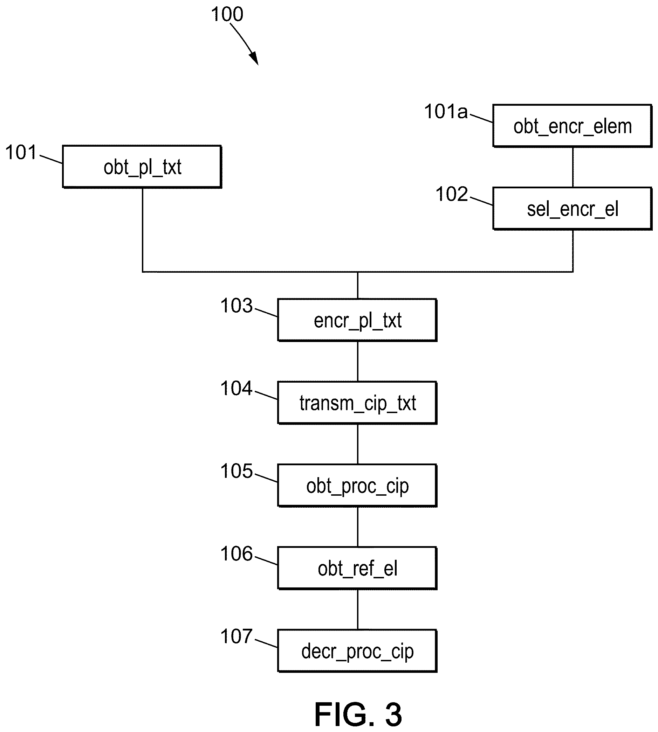

[Fig. 3] shows a flow chart of a method for processing a digital content according to a first embodiment.

**Fig. 4**

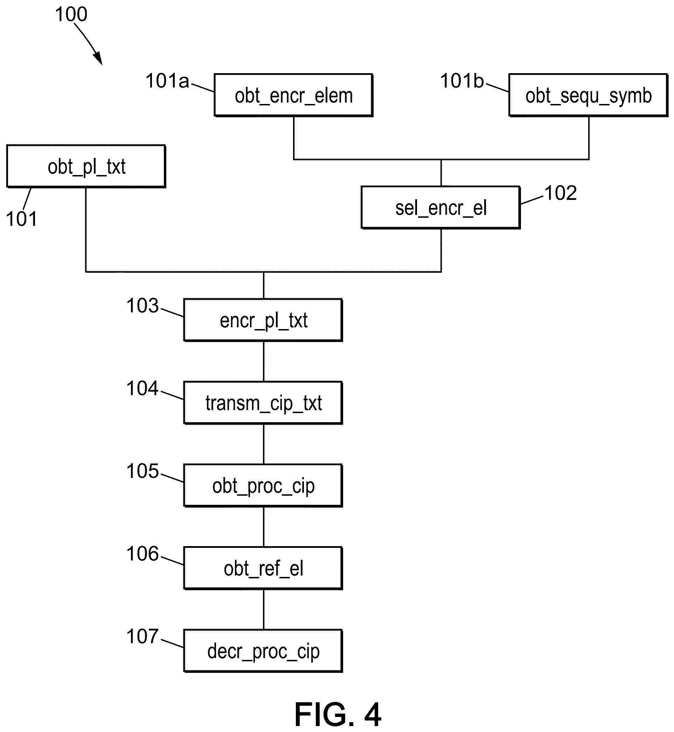

[Fig. 4] shows a flow chart of a method for processing a digital content according to a second embodiment.

**Fig. 5**

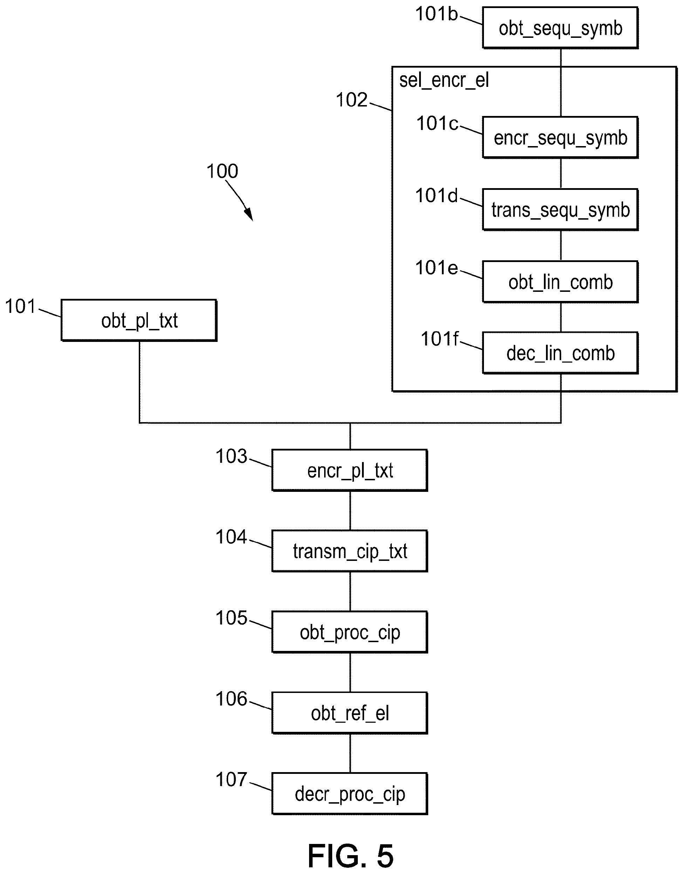

[Fig. 5] shows a flow chart of a method for processing a digital content according to a third embodiment.


**Fig. 6**

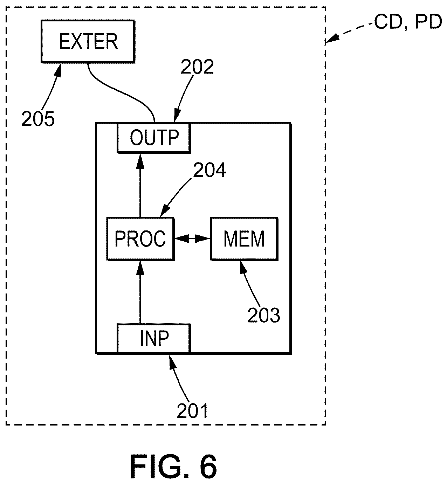

[Fig. 6] shows an embodiment of a client device/a processing device according to the present disclosure.


**Description of Embodiments**


In the following, a method for processing a digital content is presented. The method may be implemented according to several embodiments.

**Figure 1** shows a possible arrangement of a system SYS by which the method may be implemented.

The system SYS comprises a client device CD and a processing device PD that may communicate with each other over a communication channel COM such as the Internet.

For example, the client device CD and the processing device PD may each be a server.

The client device CD may determine a digital content to be processed, for example an image to be analyzed, but not dispose of the required resources for processing the digital content. Therefore, the client device CD may rely on a processing device PD to process at least partially this digital content.

The digital content may be confidential and the client device CD may not want to reveal the digital content to the processing device PD or any other third-party.

Therefore, the client device CD may encrypt a plaintext representative of the digital content, and transmit the resulting ciphertext to the processing device PD. The processing device PD may process the ciphertext by applying a processing content to the ciphertext and transmit the processed ciphertext back to the client device CD which may then decrypt it and obtain the decrypted processed ciphertext.

Thus, the client device CD may be able to delegate at least some of the processing of the digital content to the processing device PD without revealing the digital content to the processing device PD.

A flowchart of the method 100 for processing the digital content is shown in **figure 2,** and specific embodiments of the method are discussed in relation to **figures 3, 4 and 5.**

With reference to **figure 2,** at the beginning of the method 100, the client device CD may obtain (step 101) a plaintext m representative of a digital content to be processed. The client device CD may either determine the plaintext m itself or obtain instructions regarding the plaintext m to be processed.

The plaintext m may be a tensor of any dimension. The plaintext m may be defined in a space V which may be defined over a field IF, i.e. $m \in V$.

A group of encryption elements $B = \{b_1, b_2, \ldots, b_n\}$ may be used in order to encrypt the plaintext, n being the number of encryption elements in the group of encryption elements. An encryption element may be a tensor of any dimensions.

The processing device PD may obtain the group of encryption elements.

The client device CD and the processing device PD may agree on a group of encryption elements to be used by both of them in the method 100.

The client device CD may select (step 102) one or more encryption elements $b_i$ (with i = 1, 2, ...n) among the group of encryption elements.

The client device CD may encrypt (step 103) the plaintext by adding a linear combination of the selected encryption elements to the plaintext, to obtain a ciphertext. The selection may be made by the client device CD and not be revealed to the processing device PD.

In a first embodiment of the selection of encryption elements as shown in **figure 3,** the client device CD may obtain (step 101a) the group of encryption elements and select (step 102) one or more encryption elements among the group of encryption elements.

A linear combination of the selected encryption elements may be determined by the client device CD.

When considering a group of encryption elements that comprises four elements {a1, a2, a3, a4}, in one example elements 2*a1 and a3 may be selected and the linear combination of selected encryption elements may then be 2*a1 + a3.

In a second embodiment of the selection of encryption elements as shown in **figure 4,** the selection of encryption elements and the determination of the linear combination of selected encryption elements may consist in obtaining (step 101a) the group of encryption elements and obtaining (step 101b) a sequence of symbols $S = \{s_1, s_2, \ldots, s_n\}$ (such as a sequence of numbers), also referred to as secret key. The client device may then select (step 102) the encryption elements according to the sequence of symbols.

The selection of encryption elements according to the sequence of symbols may be modeled as a multiplication of a vector comprising the symbols $s_i$ of the sequence of symbols S and a vector comprising the encryption elements $b_i$ of the group of encryption elements: $\sum_{i=1}^{n} s_i \times b_i$.

The ciphertext c resulting from the encryption may then be written as $c \leftarrow m + \sum_{i=1}^{n} s_i \times b_i$.

The plaintext m may be recovered from the ciphertext c by the inverse operation:

$$m \leftarrow c - \sum_{i=1}^{n} s_i \times b_i$$

For example, a sequence of symbols [5 1 0 3] applied to the group {a1, a2, a3, a4} may mean that the resulting linear combination of selected encryption elements is 5*a1 + 1*a2 + 0*a3 + 3*a4 = 5a1 + a2 + 3a4.

The symbols of the sequence of symbols may be determined randomly.

In a third embodiment of the selection of encryption elements as shown in **figure 5,** the client device CD may delegate the calculation of the linear combination of selected encryption elements to the processing device PD.

This means that the client device CD may obtain (step 101b) the sequence of symbols, encrypt (step 101c) the sequence of symbols (in order to ensure that the processing device PD does not gain any knowledge about the sequence of symbols) and transmit (step 101d) the encrypted sequence of symbols to the processing device PD.

Regarding the encryption of the sequence of symbols, the client device CD may apply a homomorphic encryption protocol being homomorphic with respect to addition and multiplication (such as a Paillier encryption protocol) to the sequence of symbols.

Thus, any additive or multiplicative transformation applied to the encrypted sequence of symbols will lead to the same result as if these transformations had been directly applied to the sequence of symbols without encryption.

The processing device PD may then multiply the encrypted sequence of symbols and the group of encryption elements to determine an encrypted linear combination of selected encryption elements.

The client device CD may obtain (step 101e) and decrypt (step 101f) the encrypted linear combination of selected encryption elements by use of the homomorphic encryption protocol (the same homomorphic encryption protocol that was used for encrypting the sequence of symbols) to obtain the linear combination of selected encryption elements.

Having determined the linear combination of selected encryption elements, the client device CD may encrypt (step 103) the plaintext m by adding the linear combination of selected encryption elements to it.

The client device CD may then transmit (step 104) the ciphertext to the processing device PD.

In order to process the ciphertext, the processing device PD may obtain a processing content, and apply the processing content v to the ciphertext in order to determine a processed ciphertext $c_{eval} \leftarrow c \times v$.

The processing content may be public.

In addition, the processing device PD may obtain the group of encryption elements (the same group of encryption elements that was used by the client device CD for encrypting the plaintext), and apply the processing content to the group of encryption elements to obtain a group of reference elements $Bv$ = {$bv_1$, $bv_2$ ... , $bv_n$}, where $bv_i$ = $b_i \times v$.

The processing device PD may then transmit the processed ciphertext to the client device CD.

The client device CD may obtain the processed ciphertext (step 105) from the processing device PD.

In addition, the client device CD may obtain the group of reference elements from the processing device PD (step 106).

For example, the processing device PD may transmit the group of reference elements to the client device CD. In a variant, the processing device PD may publish the reference elements in order for the client device CD to be able to access the group of reference elements.

The client device CD may then decrypt (step 107) the processed ciphertext by subtracting a linear combination of reference elements among the group of reference elements corresponding to the linear combination of the selected encryption elements from the processed ciphertext to obtain a processed plaintext $m \times v \leftarrow c_{eval} - \sum_{i=1}^{n} s_i \times bv_i$.

For example, if the first and third encryption elements i.e. a1 and a3, have been selected (step 102) from the group of encryption elements {a1, a2, a3, a4} to obtain a linear combination of selected encryption elements a1 + a3 to be added to the plaintext in order to encrypt it, then the first and third reference elements, i.e. *a1v* and *a3v*, should be selected from the group of reference elements {*a1v*, *a2v, a3v, a4v*} to obtain a linear combination of reference elements *va*1 + *va*3 to be subtracted from the processed ciphertext in order to obtain the processed plaintext.

It may be proven as follows that, in order to obtain the processed plaintext $m \times v$, the respective reference elements $\sum_{i=1}^{n} s_i \times bv_i$ should be subtracted from the processed ciphertext $c_{eval}$:

$$c_{eval} - \sum_{i=1}^{n} s_i \times bv_i = c \times v - \sum_{i=1}^{n} s_i \times b_i \times v = \left( c - \sum_{i=1}^{n} s_i \times b_i \right) \times$$

$$= \left( m + \sum_{i=1}^{n} s_i \times b_i - \sum_{i=1}^{n} s_i \times b_i \right) \times v = m \times v$$

Depending on the specific parameters of the method 100 (such as the size of the plaintext space), the method 100 may provide perfect computational security, i.e. a potential attacker may not be able to able to derive the plaintext or the processed plaintext.

The security of the method 100 is based on the hardness of the decisional subset sum problem. When the sequence of symbols is composed of binary elements, i.e., $S = \{s_1, s_2, ... , s_n\}$ where $s_i = \{0,1\}$, the sequence of symbols may be interpreted as selecting (step 102) a random subset of encryption elements from the group of encryption elements **B**. The encryption (step 103) of the plaintext is performed by adding the linear combination of selected encryption elements, i.e. the sum of a random subset of the set **B**, to the plaintext. If a potential attacker can distinguish a ciphertext from a tensor having the same dimensions as the ciphertext, then the attacker can distinguish between a random element and an element that represents the sum of a subset of **B**. This problem is known as the decisional subset sum problem (DSS for short): the DSS problem asks whether there exists a subset of a given set (or group) of elements whose sum equals a specified target value. All state-of-the-art algorithms propose solutions to this problem that are exponentially in the size of the set. The complexity of the best-known algorithm is $O(2^{n \times 0.291})$. For example, if $n = 512$, the algorithm will execute approximately $2^{148}$ steps. Since there are no known probabilistic polynomial time algorithms to solve the DSS problem, this problem is called "hard". The hardness of the DSS problem is used as basis for the computational security of the method 100.

The security of the method 100 may further be improved further. When the plaintext comprises a plurality of plaintext elements of a group of plaintext elements, the encryption elements of the group of encryption elements may be configured to form a basis for each plaintext element of the group of plaintext elements.

Thus, the group of encryption elements may generate the group of plaintext elements.

For example, when considering that each plaintext element is part of a plaintext space (i.e. a group of plaintext elements) equal to $\{0, 1, ....15\}$, and when considering a group of encryption elements equal to $\{0, 1, 2, 4\}$, the group of encryption elements generates the group of plaintext elements, i.e. each plaintext element of the plaintext space can be written in a basis of 2.

This makes the method 100 practically One-Time-Pad (OTP), i.e. a scheme with perfect secrecy.

The proposed method 100 provides an encryption protocol being homomorphic with respect to addition and multiplication. The method 100 is considerably faster and more efficient than other known homomorphic encryption protocol such as Paillier.

The Paillier encryption protocol is homomorphic with respect to addition and constant multiplication i.e. $Enc(m_1) \oplus Enc(m_2) = Enc(m_1 + m_2)$ and $Enc(m_1) \odot k = Enc(m_1 k)$. Using these two properties, any linear expression can be evaluated. To compute $ax + b$ without reveling $x$, the input is encrypted using the Paillier encryption protocol. Then the following linear expression is evaluated:

$$a \odot Enc(x) \oplus Enc(b)$$

Given the homomorphic properties of the scheme, this expression represents the ciphertext $Enc(ax + b)$. Through decryption, the result of the linear operation can be recovered.

Unlike this or other similar approaches, the method 100 uses only additions which is much faster than complex modular operations performed by the Paillier encryption or similar schemes.

In practice, the following benchmark was obtained using a Python implementation on a standard computer with Intel i5 and 16GB of RAM: Average running time for evaluating a linear expression using the encryption scheme proposed by the method 100 is 0.001 seconds. Average running time for evaluating a linear expression using the Paillier encryption protocol is 4.95 seconds.

Three implementations of the method 100 will be discussed herafter:

- first implementation: the plaintext and the processing content are both vectors, and the inner product between both vectors is calculated;
- second implementation: the plaintext and the processing content are both matrices, and the matrix product between both matrices is calculated;
- third implementation: arbitrary linear multiplications.

In the first implementation of the method 100 (calculation of the inner product between two vectors), the plaintext m may be a vector $V_C = [V_{C_0}, V_{C_1}, ... V_{C_{n-1}}]$ and the processing content c may be a vector $V_S = [V_{S_0}, V_{S_1}, ... V_{S_{n-1}}]$. Both vectors are considered over a finite field $\mathbb{F}_q$ and have length $n$. The client device CD seeks to compute the inner product $V_C \cdot V_S = \sum_{i=0}^{n-1} V_{C_i} \times V_{S_i}$. This calculation may be delegated to the processing device PD.

The client device CD obtains a group of encryption elements b and a sequence of symbols d.

$|q|_b$ may be defined as the number of digits of $q$ in base $b$, i.e. the number of encryption elements in the group of encryption elements.

The client device CD selects (step 102) several encryption elelemts. The linear combination of selected encryption elements may then be expressed as: $K = \sum_{j=0}^{|q|_b - 1} d_j b^j$, wherein $0 \leq d_j \leq b$ - 1.

Each element $K_i$, $0 \leq i \leq n$ - 1 of the linear combination of selected encryption elements $K$ may be expressed as $K_i = \sum_{j=0}^{|q|_b - 1} d_{ij} b^j$, where $d_{ij}$ is a respective symbol among the sequence of symbols, and $b^j$ is a respective encryption element among the group of encryption elements. Thus, $n$ random elements $K_i$, which may be referred to as encryption keys, are used.

The client device CD may encrypt (step 103) the plaintext elements $V_{C_i}$ with $K_i$ to obtain a ciphertext C (which is also a vector), where each element $C_i$ of the ciphertext C is related to a respective element of the plaintext $V_{C_i}$ and a respective element $K_i$ by the following relation: $C_i = V_{C_i} + K_i$. This means that each element of the plaintext may be encrypted separately by a respective symbol $K_i$.

The client device transmits (step 104) the ciphertext $C$ to the processing device PD.

The processing device PD computes the inner product between the ciphertext $C$ and the processing content $V_S$ to obtain a processed ciphertext: $C \cdot V_S = \sum_{i=0}^{n-1} C_i \times V_{S_i}$.

The client device CD then obtains (step 105) the processed ciphertext $C \cdot V_S$.

The processing device PD further computes the product between each element $V_{S_i}$ of the processing content $V_S$ and each encryption element $b^j$, $0 \leq i \leq n$, $0 \leq j \leq |q|_b$ - 1. The resulting reference elements, here referred to as $LUT[i][j]$ (where LUT stands for look-up table), may be expressed as as $LUT[i][j] = V_{S_i} \times b^j$.

The client device CD obtains (step 106) the group of reference elements. For example, the group of reference elements may be published by the processing device PD.

In order to obtain the processed plaintext, the client device CD first calculates the linear combination of reference elements, i.e. the client device multiplies a respective symbol $d_{ij}$ with a respective reference element $LUT[i][j] = V_{S_i}$; $R_i = \sum_{j=0}^{|q|_b - 1} d_{ij} \times LUT[i][j]$, $\forall \ 0 \leq i \leq n$ - 1. The elements $R_i$ are the elements of the linear combination of reference elements that need to be subtracted from the processed ciphertext in oder to obtain the processed plaintext.

The processed plaintext corresponds to the inner product between the plaintext $V_C$ and the processing content $V_S$, which can be obtained by the relation $C \cdot V_S - \sum_{i=0}^{n-1} R_i$, i.e. by decrypting (step 107) the processed ciphertext which is done by subtracting the linear combination of reference elements $\sum_{i=0}^{n-1} R_i$ from the processed ciphertext $C \cdot V_S$.

The processing device PD cannot learn any information about the plaintext $V_C$ or the result of the inner product $V_C \cdot V_S$ since the plaintext $V_C$ is encrypted.

In a specific example of the first implementation of the method 100 (calculation of the inner product between two vectors), the following parameters are considered: $\mathbb{F}_2 = \{0,1\}$, $V_C = [V_{C_0}, V_{C_1}]$, $V_S = [V_{S_0}, V_{S_1}]$ and $b = 2$. The client device CD wants to delegate the computation of the inner product $V_C \cdot V_S = V_{C_0} \times V_{S_0} + V_{C_1} \times V_{S_1}$ to the processing device PD.

The client device CD selects several encryption elements (step 102) and generates a linear combination of selected encryption elements:

$$K_0 = d_{00} 2^0 + d_{01} 2^1$$

$$K_1 = d_{10} 2^0 + d_{11} 2^1$$

Based on these symbols, the client device CD encrypts (step 103) the plaintext $V_C$ and transmits (step 104) the ciphertext C (comprising elements $C_0$ and $C_1$) to the processing device PD:

$$C_0 = V_{C_0} + K_0$$

$$C_1 = V_{C_1} + K_1$$

The processing device PD computes the inner product between the ciphertext $C$ and the processing content $V_S$ and transmits the resulting processed ciphertext back to the client device CD:

$$C \cdot V_S = C_0 \times V_{S_0} + C_1 \times V_{S_1}$$

The client device CD obtains (step 105) the processed ciphertext from the processing device PD.

The processing device PD further computes the group of reference elements ($LUT[i][j]$) as:

$$LUT = \begin{bmatrix} V_{S_0} \times 2^0 & V_{S_0} \times 2^1 \\ V_{S_1} \times 2^0 & V_{S_1} \times 2^1 \end{bmatrix}$$

The client device CD then obtains (step 106) the group of reference elements from the processing device.

The client device CD computes $R_i$ based on the group of reference elements:

$$R_0 = d_{00} \times LUT[0][0] + d_{01} \times LUT[0][1]$$

$$R_1 = d_{10} \times LUT[1][0] + d_{11} \times LUT[1][1]$$

The client device CD retrieves the result of the inner product between $V_C$ and $V_S$ by decrypting (step 107) the processed ciphertext:

$$V_C \cdot V_S = C \cdot V_S - (R_0 + R_1)$$

It can be proven as follows that, in order to obtain the processed plaintext $V_C \cdot V_S$, the respective reference elements ($R_0 + R_1$) should be subtracted from the processed ciphertext $C \cdot V_S$:

$$C \cdot V_S - (R_0 + R_1)$$
$$= C_0 \times V_{S_0} + C_1 \times V_{S_1} - d_{00} LUT[0][0] - d_{01} \times LUT[0][1] - d_{10} \times LUT[1][0]$$
$$- d_{11} \times LUT[1][1]$$
$$= C_0 \times V_{S_0} + C_1 \times V_{S_1} - d_{00} \times V_{S_0} \times 2^0 - d_{01} \times V_{S_0} \times 2^1 - d_{10} \times V_{S_1} \times 2^0$$
$$- d_{11} \times V_{S_1} \times 2^1$$
$$= \left(V_{C_0} + K_0\right) \times V_{S_0} + \left(V_{C_1} + K_1\right) \times V_{S_1} - d_{00} \times V_{S_0} \times 2^0 - d_{01} \times V_{S_0} \times 2^1$$
$$- d_{10} \times V_{S_1} \times 2^0 - d_{11} \times V_{S_1} \times 2^1$$
$$= V_{C_0} \times V_{S_0} + K_0 \times V_{S_0} + V_{C_1} \times V_{S_1} + K_1 \times V_{S_1} - V_{S_0} \times (d_{00} \times 2^0 + d_{01} \times 2^1)$$
$$- V_{S_1} \times (d_{10} \times 2^0 + d_{11} \times 2^1)$$
$$= V_{C_0} \times V_{S_0} + K_0 \times V_{S_0} + V_{C_1} \times V_{S_1} + K_1 \times V_{S_1} - V_{S_0} \times K_0 - V_{S_1} \times K_1$$
$$= V_{C_0} \times V_{S_0} + V_{C_1} \times V_{S_1} + K_0 \times V_{S_0} - K_0 \times V_{S_0} + K_1 \times V_{S_1} - K_1 \times V_{S_1}$$
$$= V_{C_0} \times V_{S_0} + V_{C_1} \times V_{S_1} = V_C \cdot V_S$$

In the second implementation of the method 100 (calculation of the matrix product between two matrices), the product between a public matrix $W_S$ (i.e. the processing content) and a private matrix $W_C$ (i.e. the plaintext) is computed in a privacy-preserving way. Both matrices are considered over a finite field $\mathbb{F}_q$.

The client device CD seeks to compute a processed plaintext $P \leftarrow W_C \times W_S$ by delegating this computation to the processing device PD.

The client device CD selects (step 102) at random a matrix $K$ (i.e. a specific encryption element among a group of encryption elements) having the same dimensions as the plaintext $W_C$. The client device encrypts (step 103) the plaintext $W_C$ by adding the encryption element $K$ to it.

The client device CD then transmits (step 104) the resulting ciphertext $C \leftarrow W_C + K$ to the processing device PD.

The processing device PD computes the processed ciphertext $C_{prod} \leftarrow C \times W_S$. The client device CD obtains (step 105) the processed ciphertext from the processing device PD.

In addition, the processing device PD computes the group of reference elements, i.e. the product between each matrix over $\mathbb{F}_q$ (i.e. each encryption element of the group of encryption elements) having the same dimensions as the plaintext $W_C$, and the processing content $W_S$, in order to obtain a group of reference elements.

The processing device PD publishes the group of reference elements (here called $LT$ for look-up table).

Thus, the client device obtains (step 106) the group of reference elements, inspects the group of reference elements $LT$ and retrieves $LT_K$, i.e. the reference element that corresponds to the selected encryption element.

The client device CD decrypts (step 107) the processed ciphertext and recovers the processed plaintext, i.e., $W_C \times W_S$, by computing $P \leftarrow C_{prod} - LT_K$.

The processed plaintext recovered by the client device CD is indeed the multiplication between the plaintext n $W_C$ and the processing content $W_S$. This can be proven as follows:

$$C_{prod} - LT_K = C \times W_S - LT_K = (W_C + K) \times W_S - LT_K = W_C \times W_S + K \times W_S - LT_K$$

$$= W_C \times W_S + K \times W_S - K \times W_S = W_C \times W_S$$

The privacy requirement of the method 100 is guaranteed by the encryption protocol. The processing device PD cannot learn any information about the plaintext $W_C$ or the result of the multiplication $W_C \times W_S$ since $W_C$ is encrypted using a symbol chosen at random.

In a specific example of the second implementation of the method 100 (calculation of the matrix product between two matrices), the following parameters are considered: $\mathbb{F}_2 = \{0,1\}$, $W_C = \begin{pmatrix} 0 & 1 \\ 1 & 0 \end{pmatrix}$ and $W_S = \begin{pmatrix} 0 & 1 \\ 1 & 1 \end{pmatrix}$. The client device CD wants to delegate the computation of the product $W_C \times W_S = \begin{pmatrix} 0 & 1 \\ 1 & 0 \end{pmatrix} \times \begin{pmatrix} 0 & 1 \\ 1 & 1 \end{pmatrix} = \begin{pmatrix} 1 & 1 \\ 0 & 1 \end{pmatrix}$ to the processing device PD.

The client device CD selects (step 102) at random an encryption element K over the group of encryption elements $\mathbb{F}_q$ having the same dimensions as the plaintext $W_C$, encrypts (step 103) the plaintext and transmits (step 104) the resulting ciphertext $C \leftarrow W_C + K$ to the processing device PD.

When considering that the selected encryption element is $K = \begin{pmatrix} 1 & 1 \\ 0 & 0 \end{pmatrix}$, the client device CD transmits $C = \begin{pmatrix} 0 & 1 \\ 1 & 0 \end{pmatrix} + \begin{pmatrix} 1 & 1 \\ 0 & 0 \end{pmatrix} = \begin{pmatrix} 1 & 0 \\ 1 & 0 \end{pmatrix}$ to the processing device PD.

The processing device PD computes the product $C_{prod} \leftarrow C \times W_S$ and transmits the resulting processed ciphertext to the client device CD, i.e. the processing device PD computes $C_{prod} = \begin{pmatrix} 1 & 0 \\ 1 & 0 \end{pmatrix} \times \begin{pmatrix} 0 & 1 \\ 1 & 1 \end{pmatrix} = \begin{pmatrix} 0 & 1 \\ 0 & 1 \end{pmatrix}$ and transmits the result to the client device CD.

In addition, the processing device PD computes the product between each encryption element over $\mathbb{F}_q$, having the same dimensions as the plaintext $W_C$, and the processing content $W_S$ in order to obtain the group of reference elements:

$$\mathbb{F}_2^{2 \times 2} = \begin{Bmatrix} R_{0000}, R_{0001}, R_{0010}, R_{0011}, R_{0100}, R_{0101}, R_{0110}, R_{0111}, \\ R_{1000}, R_{1001}, R_{1010}, R_{1011}, R_{1100}, R_{1101}, R_{1110}, R_{1111} \end{Bmatrix} \text{ where } R_{abcd} = \begin{pmatrix} a & b \\ c & d \end{pmatrix}.$$

The processing device PD computes the group of reference elements $LT$ by multiplying each encryption element from the set $\mathbb{F}_2^{2 \times 2}$ with the processing content $W_S$:

$LT_{0000} = R_{0000}, LT_{0001} = R_{0011}, LT_{0010} = R_{0001}, LT_{0011} = R_{0010}, LT_{0100} = R_{1100}, LT_{0101} = R_{1111}, LT_{0110} = R_{1101}, LT_{0111} = R_{1110},$
$LT_{1000} = R_{0100}, LT_{1001} = R_{0111}, LT_{1010} = R_{0101}, LT_{1011} = R_{0110}, LT_{1100} = R_{1000}, LT_{1101} = R_{1011}, LT_{1110} = R_{1001}, LT_{1111} = R_{1010}$

The processing device PD publishes the group of reference elements LT.

Thus, the client device obtains (step 105) the processed ciphertext and obtains (step 106) the processed plaintext.

The client device CD inspects the group of reference elements LT and retrieves $LT_K$ corresponding to the selected reference element K that was used for encrypting the plaintext, i.e. the client device retrieves $LT_{1100} = \begin{pmatrix} 1 & 0 \\ 0 & 0 \end{pmatrix}$.

The client device CD decrypts (step 107) the processed ciphertext and recovers the processed plaintext, i.e., $W_C$ $\times W_S$, by computing $P \leftarrow C_{prod} - LT_K$, i.e. $\begin{pmatrix} 0 & 1 \\ 0 & 1 \end{pmatrix} - \begin{pmatrix} 1 & 0 \\ 0 & 0 \end{pmatrix} = \begin{pmatrix} 1 & 1 \\ 0 & 1 \end{pmatrix}$.

In a third implementation of the method 100 (arbitrary linear multiplications), arbitrary linear computations are considered.

The client device CD encrypts (step 103) a plaintext x by selecting (step 102) an encryption element s from a multiset R (i.e. a group of encryption elements), adding the selected encryption elements s to the plaintext x and transmitting (step 104) the ciphertext x + s to the processing device PD.

The following linear function (representative of the processing content) may be considered:

$$f(x) = ax + b$$

The processing device PD applies linear the function to the encrypted plaintext x + s, and obtains a ciphertext f(x + s) = a(x + s) + b = ax + b + as.

The processing device PD further determines a group of reference elements by applying the linear function f(x) to all encryption elements of the group of encryption elements.

The client device obtains (step 105) the processed ciphertext and obtains (step 106) the group of reference elements from the processing device PD.

The client device CD recovers the processed plaintext from the processed ciphertext (step 107) by subtracting the reference element as from the processed ciphertext.

The privacy requirement of the method 100 is guaranteed by the encryption protocol. The processing device PD cannot learn any information about the plaintext x or the processed plaintext ax + b.

In a specific example of the third implementation of the method 100 (arbitrary linear multiplications), the client device CD and the processing device PD may agree on a multiset $R = \{r_1, r_2, r_3, r_4\}$.

The client device CD selects (step 102) encryption elements $r_2$ and $r_4$ and determines the linear combination of selected encryption elements as $s = r_2 + r_4$. The client device CD encrypts (step 103) the plaintext x as $c = x + r_2 + r_4$ and transmits (step 104) the ciphertext to the processing device PD.

The processing device PD applies the processing content to the ciphertext to obtain a processed ciphertext: $f(x + r_2 + r_4) = ax + b + ar_2 + ar_4$.

In addition, the processing device determines the group of reference elements: $f(r_1) = ar_1 + b; f(r_2) = ar_2 + b; f(r_3) = ar_3 + b; f(r_4) = ar_4 + b$.

The processing device PD transmits the processed ciphertext to the client device CD.

The client device CD obtains (step 105) the processed ciphertext, obtains (step 106) the group of reference element and decrypts (step 107) the processed ciphertext and recovers the processed plaintext by subtracting the respective reference elements $f(r_2)$ and $f(r_4)$ from the processed ciphertext $f(x + r_2 + r_4)$:

$$f(x + r_2 + r_4) - f(r_2) - f(r_4) + 2b = ax + b + ar_2 + ar_4 - ar_2 - b - ar_4 - b + 2b = ax + b.$$

The method 100 has a great number of applications.

In a first application example regarding the calculation of the inner product between two vectors, the method 100 may be applied if the client device CD does not have a hardware platform that supports heavy parallelism e.g. GPUs for calculating the inner product.

The inner product involves computing n products. Although such an operation can be performed efficiently on a GPU using parallelization, for the client device CD it can represent a drawback. Using the method 100, the client device CD can delegate the computation to another party (i.e. a processing device PD) with the appropriate hardware. In the method 100, the client device CD only computes $|q|_b$ - 1 multiplications in which a term is relatively small i.e. $d_{ij} \leq b$ - 1. In many practical cases (filtering, machine learning, etc.), $|q|_b$ - 1 « n e.g. the number of bits of each number from a vector is much smaller than the number of elements in that vector (an image for example can be represented as 4096 × 4096 × 3 matrix in which each element is a byte).

In a second application example regarding a matrix multiplication, the method 100 may be used for privacy-preserving inference for machine learning. A public pre-trained machine learning model which is exposed through a service. A client device CD wants to utilize the service to make use of the model without exposing its input. Since most of machine learning models, especially neural networks, are based on matrix multiplication, the method 100 can be utilized to offer perfect secrecy to the client device CD. There is no need for the client device CD to have GPU acceleration platforms available for model inference.

In a third example regarding matrix multiplication, the method 100 may be used for Trust Execution Environment (TEE) delegation. The most efficient hardware platforms to compute matrix multiplications are GPUs. Although TEE ensures many security properties, most platforms are not efficient for matrix multiplication. The method 100 can be utilized to delegate the matrix multiplication computations from the TEE to a co-located GPU.

In a fourth application example regarding general linear computations, the method 100 can be used for various applications where a machine learning algorithm is used as a service. The method 100 may be used to enhance the efficiency of previous solutions for privacy-preserving machine learning based on trust execution environments. By using the encryption scheme proposed by the method 100, the linear computation performed in the environment can be delegated to a co-located GPU to accelerate the computations performed by the application.

**Figure 6** shows a possible embodiment of a client device CD and a processing device PD configured to implement at least part of the method 100 described in relation to **figures 2 - 5.**

Each of the client device CD and the processing device PD may comprise at least one input interface 201 for receiving messages or instructions, and at least one output interface 202 for communicating with external devices 205.

In particular, the client device CD may be configured to transmit a ciphertext c to the processing device PD via its output interface 202, and to receive the processed ciphertext from the processing device PD via its input interface 201.

The processing device PD may receive the ciphertext c from the client device CD via its input interface 201 and transmit the processed ciphertext to the client device CD via its output interface 202.

Each of the client device CD and the processing device PD may further comprise a memory 203 for storing instructions enabling the implementation of at least part of the method 100, the data received, and temporary data for carrying out the various operations of the method 100 as described above.

Each client device CD and processing device PD may further comprise one or more circuits 204, for example:

- a processor able to interpret instructions in the form of a computer program, or
- a circuit board in which the operations of the disclosed method 100 are described in the silicon, or
- a programmable electronic chip such an FPGA chip ("Field-Programmable Gate Array"), an SOC ("System On Chip"), or an ASIC ("Application Specific Integrated Circuit").

SOCs or systems on a chip are embedded systems that integrate all the components of an electronic system into a single chip. An ASIC is a specialized electronic circuit that groups customized functionalities for a given application. ASICs are generally configured during their manufacture and can be simulated by an operator of the client device CD and/or processing device PD. FPGA-type programmable logic circuits are electronic circuits that are reconfigurable by the operator of the client device CD and/or processing device PD.

Each portion of the method 100 illustrated in **figures 2 - 6** may be carried out by the same circuit or by an individual circuit.

The client device CD/ processing device PD may be a computer, an electronic component, or another device comprising a processor operably coupled to a memory, as well as, depending on the chosen embodiment, a data storage unit, and other associated hardware elements such as a network interface and a media reader for reading removable storage media and for writing to such media, which are not shown in **figures 2 - 6.**

Depending on the embodiment, the memory 203, the data storage unit, or the removable storage medium contain instructions which, when executed by circuit 204, cause this circuit to carry out or control the at least one input interface 201, the at least one output interface 202, the storage of data in memory 203, and/or the processing of data and/ or the implementation of at least part of the method 100 according to **figure 2 - 6.** The circuit 204 may be a component which implements the control of the client device CD and/or processing device PD.

In addition, the client device CD and/or processing device PD may be implemented in software form, in which case it takes the form of a program executable by a processor, or in hardware form, such as an application specific integrated circuit ASIC, a system on chip SOC, or in the form of a combination of hardware and software elements, for example a software program intended to be loaded and executed on an electronic component described above such as an FPGA, processor.

The client device CD and/or processing device PD may also use hybrid architectures, for example architectures based on a CPU+FPGA, a GPU ("Graphics Processing Unit"), or an MPPA ("Multi-Purpose Processor Array").

This disclosure is not limited to the example devices, systems, methods, and computer program products described above solely by way of example, but encompasses all variants conceivable to the person skilled in the art within the framework of the protection sought.

**Claims**

1.  A method (100) for processing a digital content, comprising:

    - obtaining (101), by a client device (CD), a plaintext representative of the digital content to be processed;
    - selecting (102), by the client device (CD), one or more encryption elements among a group of encryption elements,
    - encrypting (103), by the client device (CD) the plaintext by adding a linear combination of the selected encryption elements to the plaintext, to obtain a ciphertext;
    - transmitting (104), by the client device (CD), the ciphertext to a processing device (PD);
    - obtaining (105), by the client device (CD), a processed ciphertext from the processing device (PD), the processed ciphertext being determined by the processing device (PD) by applying a processing content to the ciphertext;
    - obtaining (106), by the client device (CD), a group of reference elements, the group of reference elements being determined by the processing device (PD) by applying the processing content to the group of encryption elements;
    - decrypting (107), by the client device (CD), the processed ciphertext by subtracting a linear combination of reference elements among the group of reference elements corresponding to the linear combination of the selected encryption elements from the processed ciphertext to obtain a processed plaintext.

2.  The method of claim 1, wherein selecting (102), by the client device (CD), one or more encryption elements among the group of encryption elements, comprises:

    - obtaining (101b), by the client device (CD), a sequence of symbols representative of encryption elements to be selected from the group of encryption elements,
    - applying the sequence of symbols to the group of encryption elements.

3.  The method of claim 2, wherein the sequence of symbols comprises a sequence of numbers.

4.  The method of claim 3, wherein the sequence of symbols comprises a sequence of binary numbers.

5.  The method of any claim 3 or claim 4, wherein the sequence of symbols comprises a sequence of random numbers.

6.  The method of any one of claims 2 - 5, wherein selecting (102), by the client device (CD), one or more encryption elements among a group of encryption elements comprises:

    - encrypting (101c), by the client device (CD), the sequence of symbols by applying a homomorphic encryption protocol to the sequence of symbols;
    - transmitting (101d), by the client device (CD), the encrypted sequence of symbols to the processing device (PD);
    - obtaining (101e), by the client device (CD), an encrypted linear combination of selected encryption elements from the processing device (PD), the encrypted linear combination of selected encryption elements being determined by the processing device (PD) by applying the encrypted sequence of symbols to the group of encryption elements;
    - decrypting (101f), by the client device (CD), the encrypted linear combination of selected encryption elements to obtain the linear combination of selected encryption elements.

7.  The method of claim 6, wherein the homomorphic encryption protocol is a Paillier encryption protocol.

8.  The method of claim 1, comprising:

    - obtaining (101a), by the client device (CD), a group of encryption elements;

    wherein the one or more encryption elements are selected, by the client device (CD), among the group of encryption elements obtained by the client device (CD).

9.  The method of any one of the previous claims, wherein the plaintext comprises a plurality of plaintext elements of a group of plaintext elements, and the encryption elements of the group of encryption elements are configured to form a basis for each plaintext element of the group of plaintext elements.

10. A computer program product comprising instructions which, when the instructions are executed by a processing unit, cause the processing unit to implement a method of any one of the previous claims.

11. A client device (CD), comprising:

   - an interface configured to obtain a plaintext representative of a digital content to be processed;
   - a circuit configured to select one or more encryption elements among a group of encryption elements,
   - a circuit configured to encrypt the plaintext by adding a linear combination of the selected encryption elements to the plaintext, to obtain a ciphertext;
   - an interface configured to transmit the ciphertext to a processing device (PD);
   - an interface configured to obtain a processed ciphertext from the processing device (PD), the processed ciphertext being obtained by applying a processing content to the ciphertext;
   - an interface configured to obtain a group of reference elements from the processing device (PD), the group of reference elements being obtained by applying the processing content to the group of encryption elements;
   - a circuit configured to decrypt the processed ciphertext by subtracting a linear combination of reference elements among the group of reference elements corresponding to the linear combination of the selected encryption elements from the processed ciphertext to obtain a processed plaintext.

12. A processing device (PD), comprising:

   - an interface configured to obtain a processing content to be applied to a plaintext representative of a digital content to be processed;
   - an interface configured to obtain a group of encryption elements;
   - an interface configured to obtain a ciphertext from a client device (CD), the ciphertext being determined by a client device (CD) by adding one or more encryption elements selected among the group of encryption elements to the plaintext;
   - a circuit configured to apply the processing content to the ciphertext, to obtain a processed ciphertext;
   - a circuit configured to apply the processing content to the group of encryption elements, to obtain a group of reference elements;
   - an interface configured to transmit the processed ciphertext to the client device (CD);
   - an interface configured to transmit the group of reference elements to the client device (CD), in order for the client device (CD) to decrypt the processed ciphertext by subtracting a linear combination of reference elements among the group of reference elements corresponding to the linear combination of the selected encryption elements from the processed ciphertext to obtain a processed plaintext.

13. A system (SYS) comprising a client device (CD) of claim 11 and a processing device (PD) of claim 12.

FIG. 1

100

101 — obt_pl_txt

102 — sel_encr_el

103 — encr_pl_txt

104 — transm_cip_txt

105 — obt_proc_cip

106 — obt_ref_el

107 — decr_proc_cip

# FIG. 2

100

101a — obt_encr_elem

101 — obt_pl_txt

102 — sel_encr_el

103 — encr_pl_txt

104 — transm_cip_txt

105 — obt_proc_cip

106 — obt_ref_el

107 — decr_proc_cip

# FIG. 3

FIG. 4

101b — obt_sequ_symb

sel_encr_el

102 —

101c — encr_sequ_symb

101d — trans_sequ_symb

101e — obt_lin_comb

101f — dec_lin_comb

100

101 — obt_pl_txt

103 — encr_pl_txt

104 — transm_cip_txt

105 — obt_proc_cip

106 — obt_ref_el

107 — decr_proc_cip

# FIG. 5

FIG. 6

EP 4 746 349 A1

Europäisches Patentamt
European Patent Office
Office européen des brevets

# EUROPEAN SEARCH REPORT

Application Number

EP 25 20 8993

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2024/163075 A1 (KU YU TE [TW] ET AL) 16 May 2024 (2024-05-16) * figure 1 * * figure 2 * * paragraph [0005] * * paragraph [0040] - paragraph [0047] * ----- | 1-13 | INV. H04L9/40 H04L9/00 |
| A | GENTRY CRAIG ET AL: "Homomorphic Encryption from Learning with Errors: Conceptually-Simpler, Asymptotically-Faster, Attribute-Based", 18 August 2013 (2013-08-18), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 75 - 92, XP047338481, ISBN: 978-3-540-74549-5 * Section 1.3. * * Section 3.1. * * Section 3.3. * ----- | 1-13 | |

**TECHNICAL FIELDS SEARCHED (IPC)**

H04L

The present search report has been drawn up for all claims

| Place of search | Date of completion of the search | Examiner |
|---|---|---|
| Munich | 3 March 2026 | Caragata, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

22

EP 4 746 349 A1

## ANNEX TO THE EUROPEAN SEARCH REPORT
## ON EUROPEAN PATENT APPLICATION NO.

EP 25 20 8993

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2026

| Patent document cited in search report | Publication date | Patent family member(s) | Publication date |
|---|---|---|---|
| US 2024163075 A1 | 16-05-2024 | CN 118041505 A<br>US 2024163075 A1 | 14-05-2024<br>16-05-2024 |

EPO FORM P0459

For more details about this annex : see Official Journal of the European Patent Office, No. 12/82